# EUROPEAN PATENT APPLICATION

(11) **EP 3 736 149 A1**
(43) Date of publication of application: **11.11.2020**
(21) Application number: 19172857.5
(22) Date of filing: 06.05.2019
(51) Int. Cl.: B60H 1/34, F24F 13/15

(54) **AIR DUCT ASSEMBLY**

(71) Applicant: NIO (Anhui) Holding Co., Ltd., Hefei City, Anhui Province (CN)
(72) Inventor: BISSELL, Andrew, Banbury Oxfordshire, OX16 3WP (GB); CHOWDHURY, Tahsin, Banbury Oxfordshire, OX15 4SN (GB)
(74) Representative: Vossius & Partner Patentanwälte Rechtsanwälte mbB

(57) **Abstract**

An air duct assembly (12) comprising an air duct (10) with an internal lumen (22) for conducting an air flow, at least one flexible vane (18) at least partially arranged in the internal lumen (22) of the air duct (10), an actuation element attached to a trailing end (28) of the at least one flexible vane (18) configured to flex the at least one flexible vane (18) transversal to the air flow at least between a first position and a second position, causing the at least one flexible vane (18) to guide the air flow differently in the first position than in the second position.

## Description

The present invention relates to an air duct assembly, in particular for a motor vehicle. The invention further relates to a ventilation system for a motor vehicle and to a motor vehicle.

Air duct assemblies are arranged in motor vehicles to provide an air flow to its interior, in particular a passenger compartment. Through the air duct assembly, the interior of the motor vehicle may be supplied with fresh and/or temperature-adjusted air. For example, the air duct assembly may be part of a ventilation or climate control system of the vehicle.

Providing an air flow to the interior may raise passenger comfort. To further enhance passenger comfort, there may be provided means for air flow strength and direction adjustment. However, providing such means for influencing the air flow may require a lot of parts, in particular moveable parts, resulting in high costs. Further, influencing the air flow, for example with vanes of the air unit assembly, may create turbulence in the air flow and/or unwanted noise sources. Such turbulence may be perceived as audible noise, thus lowering passenger comfort. Further, turbulence and flow separation corresponds to an air flow energy loss, resulting in an efficiency loss. Accordingly, the amount of air entering the interior of the vehicle may be reduced due to a, for example, redirection of the flow. This may be compensated by providing a stronger flow generator and/or a greater initial air flow. However, such a compensation may increase system costs, weight, and/or energy consumption, as well as the generated noise.

For example, US 5,238,448 describes an air-conditioning grille that comprises an inner case having an opening through which the wind blows out located in a wind blowing duct. In the duct, a plural of wind deflecting plates are provided which are bendable so that ends thereof may extend substantially crossing the blowing direction. Upstream ends of the wind deflecting plates are connected by a connecting member. An operation member is provided to bend the wind deflecting plates. This air-conditioning grille requires a lot of moving parts that are arranged in the case. Accordingly, the grille is expensive to manufacture and service. Further, reliability may be low. In particular, the air flow characteristics, including uniform adjustability throughout the entire adjustment range and the creation of wedge shaped cavities, are not satisfactory. In addition, the many parts located in the opening through which the wind blows may induce a lot of turbulence, thus increasing overall noise and energy loss.

A task of the present invention is to provide an improved air duct assembly, a ventilation system and a motor vehicle that mitigate or overcome the problems existing in the art. Preferably, the present invention reduces ventilation noises in a motor vehicle, and/or improves efficiency and practicability, and/or provides optimized air flow characteristics.

A first aspect of the invention relates to an air duct assembly, in particular for a motor vehicle. The air duct assembly may comprise an air duct with an internal lumen for conducting an air flow. Further, the air duct assembly may comprise at least one flexible vane at least partially arranged in the internal lumen of the duct and may also comprise an actuation element attached to a trailing end of the at least one vane configured to flex the at least one vane essentially transversal to the preferably new neutral, air flow at least between a first position and a second position, causing the vane to guide the air flow differently, i.e. in different directions, particularly other than the neutral direction, in the first position than in the second position.

In particular, air flowing through the duct not being guided to change the direction of flow, may be considered to have a neutral flow direction. In their neutral position, the vane(s) is/are essentially parallel to said neutral flow direction.

Such flexing of the at least one vane is understood to comprise bending said at least one vane such that at least a part of it, particularly the trailing end (i.e. the end being downstream with regard to the air flow), is positioned sideways or transversally shifted from its neutral position. In this flexed position, the air flow may be guided to a different direction than the neutral direction.

However, the air duct assembly may also be considered as not comprising the air duct but just any components necessary to arrange the vanes adjustable by flexing in the air duct.

By attaching the actuation element at a downstream part of the vane, e.g. at a trailing end, the actuation element may be particularly small and/or streamlined. This may also allow a simple construction and/or may make the actuation element easy and efficient to operate. For example, the actuation element may be arranged at an outlet of the air duct assembly and may therefore extend only a short distance into the internal lumen. Preferably just as far as to reach the trailing end of the vane. Accordingly, turbulence induced into the air flow due to the actuation element may be minimized. Further, actuation of the vane at its trailing end, for example by moving the actuation element transversal to the, e.g., neutral, air flow, may result in a curved shape of the vane that does not cause sharp pressure gradients. A curved shape may also be referred to as a bended shaped. For example, this curving or bending results in a curved shape that gradually redirects air flow, again minimizing turbulence, in particular if the flow stays attached. Overall, a flexible structure of the vane may also be favorable over rigid vanes with regard to, e.g., noise generation and ventilation efficiency.

In a further alternative or additional preferred embodiment of the air duct assembly, the air duct assembly comprises a guiding element attached to a leading end of the at least one vane and configured to allow movement of the leading end of the at least one vane, preferably essentially parallel to the air flow while, also preferably, essentially preventing movement of the leading end of the at least one vane transversal to the air flow. Also, movement of the vane may be allowed relative to the guiding element, which may be fixed in position relative to the air duct. Providing the guiding element at the leading end may result in the leading end always being essentially aligned with the air flow regardless of the position of the vane, particularly of the trailing end of the vane. Accordingly, the curved shape will always induce a gradual direction change in the air flow along the vane in the air stream direction, again minimizing separated flow and turbulence. Further, flow impact on a surface with heavy noise generation may be avoided. The guiding element may allow to compensate for a length change of the vanes in the axial direction of the air duct, which preferably corresponds to the neutral direction, and/or flow direction of the air flow, i.e. the neutral direction, due to a different curvature when being flexed in different positions. Preferably, the guide element allows sliding movement of the leading end of the vane essentially in, e.g. neutral, air flow direction and, further preferably, prevents movement of the leading end transverse to said direction.

Overall, the combination of a guiding element and an actuation element for flexing the vane may be mechanically simple. For example, the guiding element may be arranged at a fixed location, allowing easy optimization of its shape and location for turbulence minimization. Further, a fixed guide is simple and reliable. The actuation element may be configured to be transversely moved just along a single axis, for example transversal, in particular perpendicular, to the flow and/or in the bending direction of the vane. Again, the mechanics for the actuation element may be simple, for example just requiring a simple guiding structure, such as a guiding groove. Correspondingly, actuation of the actuation element and provisions for its actuation, such as a handle, may be simple. No complex hinges and bearings for pivoting and/or multi-axial movement are required. A distance change between a center of the vane and the actuation element due to a flexing of the vane when moving the actuation element may be compensated for by the guiding element. For example, if the center of the vane and the actuation element are moved closer together due to a flexing of the vane, the vane may simply just slide along the guiding element to compensate for this change in distance.

The actuation element may be configured to flex the vanes by a movement of the actuation element. Flexing may also be referred to as bending. The actuation element may be electrically or manually actuated. For a manual actuation, the actuation element may comprise a handle located outside the air duct, for example in front of the outlet of the air duct. In that case, attachment of the actuation element at the trailing end is particular beneficial since only a short extension in the air duct is required.

The air duct assembly may comprise a plurality of vanes. Hence, herein, "vanes" may relate to just one vane and/or several vanes, unless the related part of the description explicitly describes or requires several vanes.

The air flow may be generated by a flow generator, such as a blower, and/or by the speed of the vehicle. The air flow may follow the internal lumen of the duct. Thus, the air flow may essentially correspond to the longitudinal direction and/or middle axis of the duct, at least in a section upstream of any vanes. This may be referred to as neutral flow direction. Different guiding of the air flow may preferably correspond to a change in direction of the air flow, in particular when exiting an outlet or just prior, e.g. upstream, to an outlet. Additionally or alternatively, the guiding of the air flow may also adjust the strength, speed and/or overall amount of air flow, for example by increasing flow resistance in one of the two positions of the vanes. However, preferably, air flow resistance is essentially equal in both, and preferably all, positions of the vanes, which may be beneficial for efficiency of ventilation.

The leading end and the trailing end of the vanes may be defined by the streaming direction of the air flow. Correspondingly, the leading end may face away from an outlet and the trailing end towards an outlet. The leading end may comprise the leading edge of the vane and the trailing end the trailing edge. The leading end may be upstream of the trailing end. The respective ends of the vanes may be understood as an area or section of the vanes and may not necessarily be limited to the outermost end, e.g. the edge. For example, the trailing end and/or leading end, may each relate to a section extending up to 5%, 10%, 15% or 25% from the corresponding edge of the vane towards its center in its longitudinal extension.

Preferably, the vanes are at least partially or completely arranged in the internal lumen. The trailing edge of each vane may also extend partially beyond an outlet of the duct and thus form a grille at the outlet. The vanes may thus also prevent objects from entering the duct at the outlet. The vanes may be configured as flat sheets or plates. In particular, the vanes may be thin enough to be easily flexed between their different positions. In particular, the vanes may be arranged to extend across the internal lumen to opposite sides of the air duct. Preferably the thin ends of the vanes adjacent to the wall(s) of the duct may be flush with or very close to the wall at least in one or all of the positions of the vanes. Any remaining gap at the thin end may be sealed, for example by a brush or other sealing section.

The actuation element may be configured to be moveable between a first and a second position, which correspond to the first and second positions of the vanes. In particular, the movement between the two positions of the vanes may be only translatory, resulting in simple mechanics and/or guiding structure for the actuation element. By comparison, movement of the vane between the first and second position may require translatory and/or pivotal movement. However, the mechanics for such a movement may easily be provided by the flexing, e.g. shape change, of the vanes and the guided attachment for translatory movement at the leading end by, preferably in, the guiding element.

Preferably, the vane is arranged in the area of/at an outlet of the air duct so that the direction of the air flow out of the air duct can easily be influenced by the position of the at least one vane. Each of the positions of the vane may correspond to a different shape into which the vane has been flexed. This may include different bending or flexing radii as well as different positions of both trailing and leading ends of the vane. At least one of the positions may be a neutral position. In this position, preferably, the vane has no internal tension and is thus not flexed. The flexing may be understood to correspond to a movement of just a section of the vane that induces tension into the vane. Each of the positions of the vanes may also correspond to a different position in and/or relative to the guiding element.

The vanes may comprise a flexible material, in particular an elastic material, especially rubber-elastic material. The flexible material may allow the vanes to be flexed between the first position and second position without damaging the vanes. At least a section of the vanes may be flexible, for example a flexible middle section. Preferably, the complete vane is flexible and made from a single material, particularly for ease of manufacturing and/or improved functionality. However, the vanes could also comprise at least one hinge, such as a film hinge forming the flexible part and otherwise comprise rigid parts. For example, the vanes could be made from a flexible plastic material, in particular in the case of a very thin vane, or rubber, in particular thin rubber-like sheets. Flexing of the vane by the actuation element may result in partially bending the vane.

The guiding element may be arranged in the internal lumen of the air duct. The guiding element may be configured as a flow guide, particularly a flow straightener, upstream of the vanes, thus further reducing turbulence and noise. The actuation element may at least be partially arranged in the internal lumen of the air duct, preferably completely.

There may be several positions between and/or beyond the first and second position. In particular, the vanes may be moved and thus be bended continuously between those positions into other positions so as to allow fine air flow adjustment. The vanes may be flexed along a line essentially transversal to the air guiding surface of the vanes, e.g. transversal to their main extension. The flexing direction of the vanes may correspond to an imaginary straight line between their first and second position, in particular to a straight line between the center of the trailing end and/or the trailing edge of the vane in the first and second position. The flexing direction may be identical or at least parallel for each vane. The flexing direction preferably corresponds to a movement direction of the actuation element, to the trailing end and/or trailing edge movement of each vane. The actuation element and vanes are preferably at least indirectly attached to each other, and preferably each vane is attached to the actuation element, so that a translatory movement of the actuation element is induced to and results in a corresponding translatory movement of the vanes, at the attachment points.

In a further preferred embodiment of the air duct assembly, the air duct assembly comprises a plurality of flexible vanes arranged spaced apart from each other and each at least partially arranged in the internal lumen of the duct, preferably wherein the vanes are arranged parallel to each other and/or maintain their relative distances to each other, in particular at all longitudinal locations along the vane/s in the first position and the second position. Such an air duct assembly, particularly guiding element, may achieve better redirection of the air flow. Preferably, it is the alignment of the guiding element or leading edge to the flow which prevents leading edge separation and therefore a better redirection of the flow. Parallel arrangement and/or maintaining the relative distances may be beneficial regarding turbulence, particularly since the distance between the outermost vanes and the respective walls of the duct can be maintained across the longitudinal length of the vane/duct and/or kept equal to the distance between any two vanes. The benefit may be considered as being the lack of a wedge cavity; which is inevitable with rigid vanes. Advantageously and preferably, the flow will not be accelerated or decelerated due to a nozzle effect caused by distance changes between different vanes depending on their positions. Such a nozzle effect may also be referred to as a jet-effect. During flexing, the vanes may maintain their relative distances. In particular, flexing of each vane may be essentially identical to the flexing of all other vanes in each position and the assembly may be configured so that all vanes are always flexed together. Being parallel to each other may mean for the vanes that they have essentially parallel air guidance surfaces. Preferably each vane may have an identical shape and/or construction, in particular in a neutral, non-bent position. Preferably, each vane flexes in the same direction during movement of the actuation element and/or each vane flexes essentially identical to the other vanes. Preferably, each vane is arranged at the same longitudinal axial location in the duct, e.g. trailing end and/or leading end positioning is at the same longitudinal axial location of the duct. This prevents or reduces the possibility of separated flow from one vane hitting another vane, which may otherwise increase noise and decrease efficiency. Preferably, each vane guides the air flow, in particular together in the same direction. Depending on the structure of the air duct, vanes may have different shapes, e.g., different lengths, and thus flex or bend differently. Also, different or differently positioned guiding elements may be provided for different vanes, which may thus also flex or bend differently.

In a further preferred embodiment of the air duct assembly, each of the plurality of vanes is attached with their respective leading ends to a respective guiding element. Such an attachment, or other arrangement, may lead to each of the plurality of vanes to be constrained at their respective leading ends by the respective guiding element, in particular in a direction transverse to the longitudinal direction. Accordingly, each guiding element may be small and streamlined. Each guiding element is preferably configured to allow movement of the leading end of the corresponding vane essentially parallel to the air flow while essentially preventing movement of the leading end of the corresponding vane transversal to the air flow. Provision of a corresponding guiding element for each vane may allow for simple and reliable guiding elements. Preferably, the guiding elements are equally spaced apart, particularly in a direction transversal to the air flow. Each guiding element may be identical to the other guiding elements, thus decreasing the required number of different parts.

In a further preferred embodiment of the air duct assembly, each of the plurality of vanes is attached with their respective trailing ends to the actuation element. Only one single, common actuation element may thus be needed to flex the plurality of vanes. Further, such a single actuation element may ensure that each vane is always flexed into the same position for uniform flow guidance. E.g. one common actuation element may be configured to simultaneously flex the plurality of vanes in a direction transversal to the air flow, at least between respective first positions and respective second positions, causing the plurality of vanes to guide the air flow differently in their first positions than in their second positions. Overall, strong and effective flow guidance may be achieved with fewmoveable parts and simple actuation mechanics.

In a further preferred embodiment of the air duct assembly, the actuation element is configured to allow flexing of the trailing end of each vane, preferably transversal to the air flow, while also preferably essentially preventing movement of the trailing end of each vane in a direction parallel to, e.g. in the neutral direction of, the air flow. This may facilitate use of simple guiding elements. Further, such a construction may result in the trailing edge always being at the same axial position (e.g. position seen in direction of the neutral air flow) in the duct, thus preventing extension beyond an outlet of the duct. In other words, the trailing ends of the vanes preferably move essentially within one plane and preferably in one dimension. Any axial movement of the leading end of the vanes resulting from actuation, e.g. movement, of such an actuation element may be compensated by the guiding elements at the leading end. This is, the leading ends may be guided by the guiding elements so as to allow movement in said axial direction.

In a further preferred embodiment of the air duct assembly, the vanes and/or the actuation element are arranged at an air outlet of the air duct. The outlet with the actuation element and/or vanes may also be referred to as a register, in particular an adjustable register. The outlet may be at or constitute the end of the internal lumen at a downstream side of the duct. The outlet may be configured to release the air flowing through the duct into an interior of the motor vehicle. With the vanes, a direction of the air exiting the outlet may preferably be influenced by adjusting their positions.

In a further preferred embodiment of the air duct assembly, a wall of the air duct comprises at least one aperture or recess or other guiding or position structure into which and/or along which the actuation element may at least partially move for flexing the vanes between the first and second positions. This may allow a more compact construction while not inhibiting the flexing range of the vanes and therefore air guiding performance. The actuation element is preferably flush with the depression or aperture in each position, particularly in the extreme opposite first and second positions. For example, the aperture or recess may correspond in its cross section to a cross section of the actuation element, wherein both cross sections are taken transversal, in particular perpendicular, to the movement direction of the actuation element. Accordingly, air turbulence at the boundary of the internal lumen where the actuation element may pass beyond the air duct is reduced. Preferably, the recess or aperture is arranged at the outlet of the air duct. The aperture or recess or other guiding or position structure may be formed by a cladding element, such as an outlet cladding element, alone or together with other wall parts of the air duct. The cladding element may be understood as an air duct wall if it still forms the internal lumen or an extension of the internal lumen of other wall parts of the air duct. The aperture may also be formed by two spaced apart air duct wall elements. The recess may be interior and/or internal lumen facing. E.g., the recess may be a section with a larger diameter or cross-section of the air duct. Due to the aperture or recess or other guiding or position structure, the actuation element may partially move out of or beyond the internal lumen of the air duct when actuating the vanes between their positions. The aperture may be formed as a step or a slot, in particular a step or slot corresponding to the shape of the actuation element. The aperture and/or recess may be configured to not influence the effective internal lumen of the duct.

In a further preferred embodiment of the air duct assembly, the guiding elements are configured as sleeve structures in which the leading ends of the vanes are housed, respectively, or/and by which they are guided. The guiding elements may also be referred to as shrouds, particularly if configured as sleeves. The guiding elements may form an opening for receiving a corresponding vane. The vanes may glide or slide within the opening of the guiding elements in an axial direction, in particular a longitudinal direction of the air duct and/or a, preferably neutral, flow direction of the air flow, when being flexed between their positions. Preferably, the housing elements are as flush as possible in an air flowing direction with each respective vane to minimize turbulence.

In a further preferred embodiment of the air duct assembly, the air duct is a rectangular air duct, in particular the internal lumen of the air duct being rectangular, and/or the air outlet is a rectangular air outlet. Preferably, the air duct is at least rectangular in an axial region of the vanes. The shape of the vanes may thus easily correspond to the shape of the internal lumen, in particular each vane essentially fully extending from and between opposite sides of the wall along their complete longitudinal length. Accordingly, edges of the vanes may be flush with the adjacent walls of the duct, which may minimize turbulence. The vanes may be flush in each of their positions due to being held in the air duct by the guiding elements and the actuation element, as described above.

In a further preferred embodiment of the air duct assembly, the flexing between the first and second positions defines a flexing direction and the respective vane located closest to a wall of the air duct on each side along the flexing direction preferably contacts or gets close to, with its trailing end, the (side) wall of the air duct in one of the first and second positions. In other words: At least in one position the vane closest to one side of the duct may essentially lay flush against the wall of the air duct with a major section or its complete guidance surface, in particular the part located outside the respective guiding element in that position. Such a design may remove wedge shaped cavities common with rigid vanes, thus minimizing small gaps and accelerated flow velocity while maximizing available internal lumen cross section. Further, the outermost vanes closest to the wall may also or alternatively delimit the internal lumen width and/or the internal lumen of the air duct available. This may allow the effective width of the air duct to remain constant, regardless of the position of the vanes.

In particular, due to a stepped feature on either side of the wall of the air duct, at least one of the vanes closest to said wall may be flush with an adjacent upstream portion of the wall in all flexed positions. Specifically, this flushness may refer to a point where the inboard surface of the vane leading edge and/or guiding element meets the wall upstream of the step.

Usually there are two vanes closest to the opposing side walls of the air duct, one on each side. The flexing direction may correspond to a straight line, in particular a straight line connecting the trailing edge of a vane in each of its positions. Preferably, said line is perpendicular to the surface of the vanes. Accordingly, the flexing direction may correspond to the axis of movement of the actuation element. The flexing direction may be referred to as the flexing axis. The flexing of the trailing ends of the vanes may define the flexing direction. The flexing direction may be a straight line connecting each end of the vanes closest to the actuation element between their respective first and second position. Preferably one vane, for example a left vane in the flexing direction, rests on or close to the wall in its first position while the other vane of the vanes closest to the wall, for example the right vane in the flexing direction, is at least partially and particularly at its trailing end spaced apart from the wall. By comparison, the one vane, e.g. the left most vane, is spaced with its trailing end from the wall in its second position while the other vane, e.g. the right most vane, rests in its second position on or close to the wall with its trailing end. For the above construction, the air duct wall may also act as a stop for limiting the flexing range of the vanes without requiring additional parts and/or a limitation of the movement of the actuation element. Preferably, the complete vane outside the guiding element contacts or lays close to the wall in one of its two positions and is spaced apart therefrom in the other and particularly its second positions. The contacting may correspond to resting flush on the wall. The vane contacting the wall may form a flush boundary of the internal lumen with parts of the air duct adjacent in a longitudinal direction.

In a further preferred embodiment of the air duct assembly, at least one of the vanes closest to the wall of the air duct is flush with an adjacent upstream portion of the wall in the position where the trailing end contacts the wall. In particular the leading end of the vane outside the guiding element is flush. Again, turbulence and therefore noise may be minimized with such a design. For example, the wall may comprise a recess and/or a step to allow the vane being flush. Preferably the vane is nested in the recess and/or step in the position where it rests on the wall. Preferably the respective guiding element is nested in the recess and/or step. Alternatively or additionally, one guiding element, and at least its leading end, is flush with the wall, as described above. Flush may be defined in the airstream direction in the internal lumen.

In a further preferred embodiment of the air duct assembly, the flexing between the first and second position defines a flexing direction and at least one vane located closest to the wall of the air duct in the flexing direction forms a boundary of the internal lumen of the air duct. E.g. a section of that vane at least partially defines the internal lumen instead of a radially outward adjacent wall section of the air duct. Preferably the vanes on both ends along the flexing direction delimit the internal lumen. Delimiting of the internal lumen may be understood here in at least as far as the respective vanes extend in the axial direction of the duct and/or along its internal circumferential direction. Such a design may allow providing a constant cross sectional area of the internal lumen in every position of the vanes, in particular if the movement of the vanes closest to the wall is synchronized with a common actuation element.

The guiding elements may be shorter for the vanes closest to the wall in flexing direction. These guiding elements may also be flush with an upstream area, e.g. a section, of the wall of the air duct, preferably also being nested in a recess, aperture and/or a step.

In a further preferred embodiment of the air duct assembly, the air duct flares outwardly in the axial region of the trailing end of the vanes. The flare may be a curved region of the wall of the air duct. The flare may be defined as a gradual increase in diameter in a downstream direction. The increase in diameter may follow a gradually increasing radius. Such a design is particular beneficial if the vanes closest to the wall of the air duct in the flexing direction are designed as above. The flare may correspond to the curvature of the flexed vanes, thus achieving a compact design and not limiting the vanes to a straight position at the wall. E.g. the flare may correspond in curvature to the part of the vanes that is curved when flexing them between their positions. The radius of the flare may be configured to correspond to the radius of the vanes, in particular to the vanes closest to the wall in their respective positions when resting on the wall. The flare may correspond to one of the positions of the outermost vane so that this vane is nestled on the air duct wall flared region and/or rests flush on the flared region. Preferably, the flare is also forming an outlet or axial end region in the longitudinal direction of the duct. The flare is preferably only provided on walls arranged in the flexing direction of the vanes, e.g. walls extending transversal thereto. For example, if the vanes may flex in a left-right direction, the walls to the left and right of the vanes may be flared but not those above or below.

In a further preferred embodiment of the air duct assembly, the actuation element and each respective vane are connected at the trailing end of each respective vane so that the respective trailing end of each respective vane may pivot relative to the actuation element. The pivotal attachment may allow compensation of orientation change of the trailing edge when flexed between the different positions. For example, in one position the trailing edge of a vane may be facing in a direction aligned with the longitudinal axis of the duct while forming an angle with the longitudinal axis in another position. Due to the pivotal attachment, tension in the trailing edge of the vanes may be low even when the vane is strongly flexed in one direction. The attachment of the actuation element and each vane may be configured to allow relative rotation between the trailing end and the actuation element when flexing between their respective first and second position and/or when moving actuation element between first and second position. The vanes may each be attached to the actuation element with a bearing with one degree of freedom, the degree of freedom being a rotational degree of freedom. The axis of rotation may be transversal to the movement direction of the actuation element and/or the flexing direction of the vanes. The above-described design of the assembly may allow the trailing edge of the vanes to move together with the actuation element in the flexing direction while rotating about their respective attachment element, in particular about an axis essentially perpendicular to the flexing axis and/or the movement direction of the actuation element. The rotation axis may be parallel to at least one of the air guiding surfaces of the respective vane. Preferably, attachment of the vanes to the actuation element is provided by a bar or pin element(s) of the actuation element that is received in a recess or aperture, such as a blind-hole or through-hole, in the trailing end of the respective vane. Such an attachment is simple, reliable and cost-effective to manufacture.

In a further preferred embodiment of the air duct assembly, at least one section of the actuation element is flush with an adjacent wall of the air duct, preferably being received in a groove in a wall of the air duct and/or the outlet. Again, turbulence may be reduced with such a design. Accordingly, an inner surface of the actuation element may be arranged in the same plane as an adjacent section of the air duct wall and therefore also limit the internal lumen of the air duct. Preferably, the groove extends in a direction parallel to the flexing direction of the vanes and/or movement direction of the actuation element. E.g. the groove may be arranged at a wall side transversal to that direction and extending in parallel to that direction. The groove may also provide a guide for movement of the actuation element. In particular, any part of the actuation element extending along the flexing direction and/or movement direction of the actuation element may be received in the groove and may be flush. Such a part may be a bar element connecting the trailing ends of the vanes with each other, wherein attachment is preferably provided with a further bar transversal thereto for each vane. Any part of the actuation element received in the groove may be arranged outside of the internal lumen and/or arranged completely in the groove. Preferably, the actuation element has a ladder structure with two opposite bars extending in the flexing direction. These bars may be received in grooves and serve to guide movement of the actuation element for flexing the vanes. These two opposite bars may be connected by the further bars each serving for attachment of the vanes. Those further bars may extend through the trailing end of the vanes. The actuation element may comprise additional bars located between the vanes that serve as a grille preventing small items from falling in the air duct. The actuation element may thus provide a grille structure at an outlet of the air duct.

A second aspect of the invention relates to a ventilation system for a motor vehicle comprising an air duct assembly according to the first aspect of the invention. Since the ventilation system according to the second aspect of the invention comprises the air duct assembly according to the first aspect of the invention, improvements, features and embodiments of the first aspect can be considered as examples and embodiments of the second aspect of the invention, and vice versa. The ventilation system may comprise a control device for controlling settings of the ventilation system, such as blower operations, temperature of the air flow and/or heating and/or cooling operations, and/or the position of the vanes of the air duct assembly. In particular, the ventilation system may be configured as a climate control system for a motor vehicle comprising an air duct assembly according to the first aspect of the invention.

A third aspect of the invention relates to a motor vehicle, in particular a car, comprising the air duct assembly according to the first aspect of the invention and/or the ventilation system according to the second aspect of the invention. Since the motor vehicle according to the third aspect of the invention comprises the air duct assembly according to the first aspect of the invention and/or the ventilation system according to the second aspect of the invention, improvements, features and embodiments of the first aspect and second aspect can be considered as examples and embodiments of the third aspect of the invention, and vice versa.

Other features of the technology will be apparent from consideration of the information contained in the above as well as in or in combination with the following detailed description, abstract, drawings and claims. The present technology is illustrated by way of example, and not by way of limitation, in the figures of the accompanying drawings, in which like reference numerals refer to similar elements including:
Fig. 1 illustrates in a schematic sectional view an air duct assembly.
Fig. 2 illustrates an actuation of a vane of the air duct assembly according to Fig. 1.
Fig. 3 illustrates in a cross sectional partial view of the air duct assembly according to Fig.1 how an actuation element is arranged in an air duct of the air duct assembly.
Fig. 4 illustrates in another cross sectional view a position of one of the vanes of the air duct assembly according to Fig. 1 where the vane partially rests on a section of a wall of the air duct.
Fig. 5 illustrates in a perspective view an outlet of the air duct assembly according to Fig. 1.

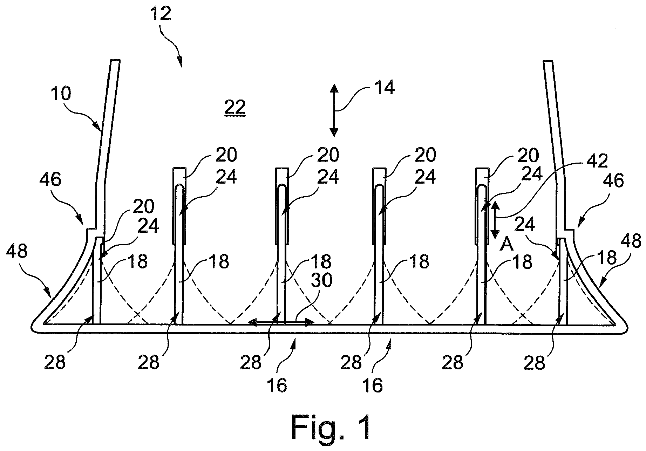

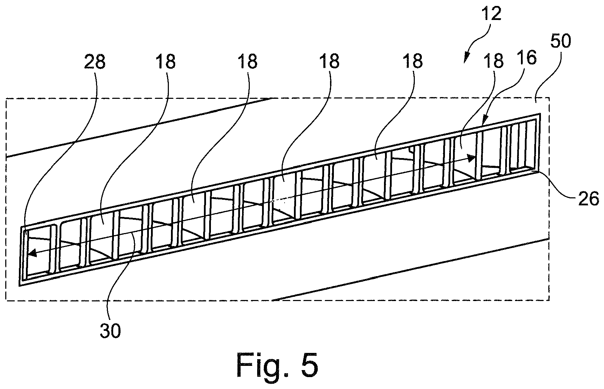

Fig. 1 illustrates in a sectional view along a longitudinal direction of an air duct 10 an air duct assembly 12 for a car, wherein the longitudinal direction is illustrated by arrow 14. The duct 10 has a rectangular cross-sectional shape, as can be taken from the perspective view of Fig. 5, which also shows the outlet 16 of the air duct 10. An air flow, for example generated by a blower of the car, flows through an internal lumen 22 the air duct 10 in a direction along the arrow 14 towards the outlet 16 of the air duct 10.

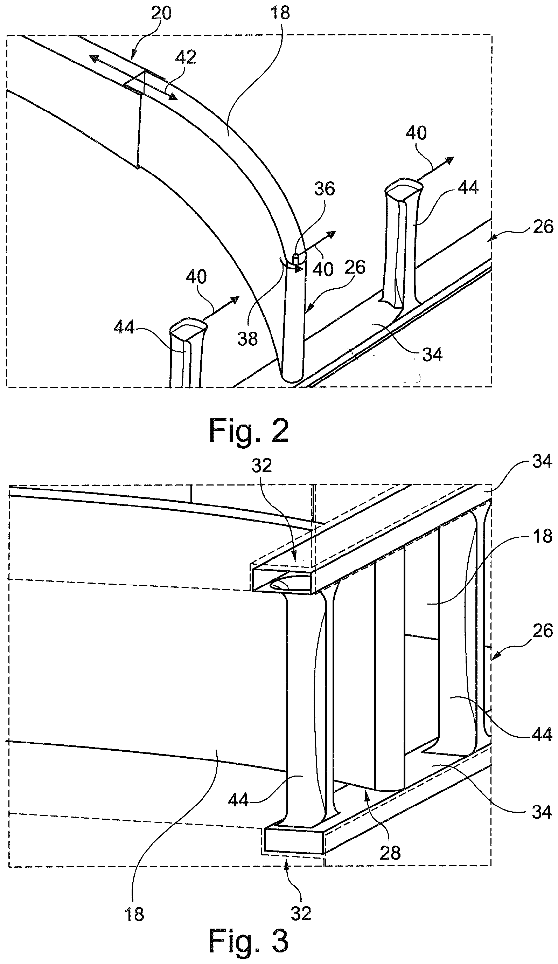

Further, the assembly 12 comprises a plurality of flexible vanes 18. The vanes 18 are arranged at regular intervals in a direction perpendicular to the longitudinal axis of the duct 10. Each vane 18 is made from a flexible material, for example a thin rubber sheet or being formed as a thin plastic plate. Presently, as can also be taken from the perspective sectional views of Fig. 2 and Fig. 3, the vanes 18 extend upwards and downwards in the plane of Fig. 1 and essentially along the longitudinal direction of the duct 10 in Fig. 1.

Each vane 18 is arranged in a guiding element 20, respectively. The guiding elements 20 allow translatory movement of the respective corresponding vane 18 along the longitudinal direction of the duct 10, as illustrated by arrow 14, while preventing movement of each leading end 24 transversal to the longitudinal direction. Accordingly, the vanes 18 may slide forward and backwards in the guiding elements 20, which are, for example, formed as a shroud. The guiding elements 20 are essentially flush with the part of the vanes 18 located outside of the guiding elements 20.

The vanes 18 may be flexed between several positions in order to bend an air flow guiding surface of the vanes 18 arranged outside the guiding elements 20 at an angle to the flow of air through the internal lumen 22 of the duct 10. For example, Fig. 1 illustrates a neutral position of each vane 18 where the air flow may just flow straight while passing the vanes 18. However, the vanes 18 may also be flexed into a position where they are bent to the left or right in the plane of Fig. 1. These positions are each illustrated with dotted lines in Fig. 1. As can be taken from Fig. 5, bending the vanes 18 in such a position will cause the air flow to be deflected to the left or right when exiting the outlet 16. Accordingly, the air duct assembly 12 provides means to adjust an air flow direction as required by passengers of the car.

Each vane is attached with a trailing end 28 to an actuation element 26. The actuation element 26 is arranged at the outlet 16 of the air duct 10 and may be moved from the left to the right and vice-versa in the plane of Fig. 1, as illustrated by arrow 30. As can be taken from Fig. 1 as well, the movement direction of actuation element 26 corresponds to the flexing direction of the trailing ends 28 of each vane.

When moving the actuation element 26 to a side, the trailing ends 28 of each vane 18 will move in the same direction, causing the trailing end portion of the vane 18 to flex in that direction. Accordingly, a curvature will be formed in each vane 18, as illustrated with the dotted lines in Fig. 1. This curvature will cause the air flow to be gradually redirected along the surface of each vane 18, thus redirecting the air flow while avoiding sharp pressure gradients and flow separation.

However, flexing the vanes 18 in one direction will shorten the extension of the vanes 18 in the longitudinal direction of the duct 10. In the case of the air duct assembly 12, this will be compensated by the vanes 18 sliding forward towards the outlet 16 at their leading ends, in the guiding elements 20. Accordingly, the mechanics for the adjustability of the air flow direction out of the outlet 16 are very simple. For example, the actuation element 26 is just required to move along a straight line illustrated by arrow 30. No complex structure for multi-axial and/or pivoting movement located at least partially within the internal lumen 22 is required that may otherwise result in turbulence, which may be perceived by passengers as unwanted noise.

For example, the actuation element 26 may simply be received in guiding grooves 32 of the wall of the duct 10, as is illustrated in Fig. 3. These grooves 32 may allow the actuation element to slide in the direction of arrow 30 whilst maintaining flushness between the transversal bars' 34 inboard surfaces and adjacent portions of the wall of the duct 10.

The actuation element 26 further comprises vertical bars 36. Each vertical bar 36 is received in a through hole of the vanes 18 and connects an upper transversal bar 34 with a lower transversal bar 34, wherein lower and upper corresponds to the upper and lower direction in Fig. 3 or upwards out of the paper plane and downwards into the paper plane in Fig. 1. The vertical bars 36 cause the trailing ends 28 of the vanes 18 to move together with the actuation element 26 in the direction of the arrow 30. However, the attachment between actuation element 26 and each vane 18 allows the trailing edge of the vanes 18 to pivot relative to the actuation element 26. Such a pivotal movement is illustrated in Fig. 2 by arrow 38 if the actuation element 26 is moved in the direction illustrated by arrows 40 in Fig. 2. This reduces tension in the vane 18 when being flexed, thus facilitating actuation and decreasing the risk of mechanical failure of the vanes 18 and/or the actuation element 26.

Fig. 2 also illustrates with arrow 42 how the vane 18 slides forward and backwards within the shroud-like guiding element 20 depending on the position into which the vane 18 is flexed. This reduces tension on the vane 18 and also allows the combination of the guiding elements 20 and respective vanes 18 to maintain an equal distance to the outlet 16 in the longitudinal direction of the duct 10 or flow direction of the air flow.

As can be taken from Fig. 3 and Fig. 5, the vertical bars 36 and transversal bars 34 form a simple-ladder like structure of the actuation element 24. Additionally, the actuation element 20 comprises optional further vertical bars 44 which connect the two transversal bars 36 with each other. These further vertical bars 44 serve to reduce the smallest opening through the actuation element 26 and therefore the outlet 16, thus preventing small objects from entering the internal lumen 22 of the air duct 10. The further vertical bars 44 may also be referred to as grille bars. Overall, the actuation element 26 provides a grille structure at the outlet 16.

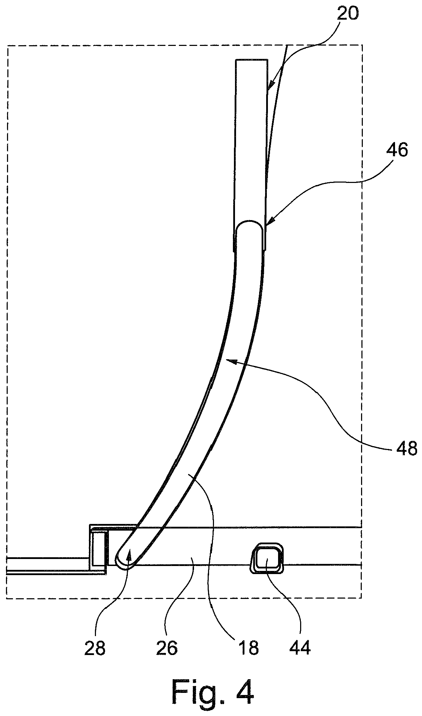

Further, as can be taken from Fig. 1, there is one vane 18 closest to the wall of the duct 10 on each end of the flexing direction illustrated by arrow 30. E.g. in the view of Fig. 1 the leftmost vane 18 and the rightmost vane 18 are closest to the wall of the duct 10. Each of these two vanes 18 is arranged with its respective leading end 24 in a guiding element 20 that is shorter than the other guiding elements 24. E.g. the leftmost and rightmost guiding elements 20 extend less upstream than the other guiding elements 20. In the case of the leftmost and rightmost guiding elements 20, which may also be referred to as the outermost guiding elements 20 in the flexing direction, the guiding elements are arranged flush with an adjacent upstream portion of the wall of the duct 10. For that purpose, the wall of the duct has an outward step 46 in the streaming direction into which the outermost guiding elements 20 are nested. As can be taken from Fig. 4, the outermost guiding elements 20 may also extend through the wall of the duct 10, thus being partially arranged outside of the internal lumen 22. The flush design reduces turbulence, thus increasing efficiency while decreasing noise. By comparison, the other guiding elements 20 have a longer longitudinal extension to also prevent turbulence by allowing a more streamlined design. For example, the other guiding elements 20 may taper at their leading end. Due to the stepped feature 46 on either side of the wall of the air duct 10, at least one of the vanes 18 closest to said wall may be flush with an adjacent upstream portion of the wall in all flexed positions. Specifically, this flushness may refer to a point where the inboard surface of the vane 18 leading edge 24 and/or guiding element 20 meets the wall upstream of the step 46.

As can also be taken from Fig. 1, the outermost (e.g. leftmost and rightmost) vanes 18 form the boundary of the internal lumen 22 in the axial section of the duct 10 where these vanes 18 extend beyond the guiding element 20. Accordingly, the cross-sectional area of the internal lumen 22 remains constant regardless of the position into which the vanes 18 have been flexed. The constant width has been illustrated in Fig. 5 with the arrow 30. Accordingly, the vanes 18 do not provide a local flow acceleration in certain vane 18 positions at locations such as the region of the outermost vanes 18, for example. Such an acceleration may cause a jet effect that could result in increased noise emissions. Further, there is no space formed in the duct 10 in certain vane 18 positions that does not allow an air flow therethrough, e.g. being blocked by the vanes 18. Such a space may also be referred to as a deadspace and may generate noise due to a cavity excitation mode. Also, and similarly to above, a wedge shaped cavity, typically formed between the outermost vanes and the closest wall of the duct is avoided in the internal lumen 22, these areas could otherwise generate a tonal noise. Again, noise emission may thus be reduced and the assembly 12 may be more compact.

For the above purpose, the duct 10 has a flared section 48 in the flexing direction of the vanes 18, which may also simply be referred to as a flare 48. This flared section 48 has a radius that corresponds to the curvature of the outermost vanes 18 when flexed in the left or right direction, respectively. Accordingly, the outermost vanes 18 closest to the wall of the duct 10 may rest essentially flush on the flared section 48 in a corresponding position. Such a position is shown for the leftmost vane 18 in Fig. 4. As can be seen, the vane 18 follows the flared section 48 and essentially forms a continuous section to the upstream adjacent wall section. Overall, a boundary of the internal lumen 22 is therefore very smooth in each position of the vanes 18. In particular, transition from the wall of the duct 10 delimiting the internal lumen 22 to the outermost vanes 18 delimiting the internal lumen 22 is smooth. Further, the flared section 48 allows all the vanes 18 to be flexed equally and parallel even in the case of the outermost vanes 18. Further, the flared section 48 acts as an integrated stop that limits the movement range of the actuation element 26 via the outermost vanes 18, thus reducing the complexity of the assembly 12. The step 46 and the flared section 48 together form a recess for nesting the outermost vanes 18 in a position where they are flexed against the wall of the duct 10.

As can be taken from Fig. 5, the assembly 12 also comprises a cover element 50 forming a cladding of the outlet 16. That cover element 50 may be configured to be attached to the duct 10 and may form the instrument panel of the interior cabin of a car. The duct 10 and the cover element 50 may provide an aperture therebetween that allows the actuation element 26 to be moved in the moving direction, e.g. corresponding to the flexing direction and arrow 30 as well as to the left-right direction in the figures, beyond the internal lumen 22.

Overall, the air duct assembly 12 provides a register for an outlet 16 of a ventilation system of a car that allows occupants to adjust direction of the air flow exiting the outlet 16 according to their preferences while avoiding or at least reducing noise, or risk thereof, due to vortices in a separated flow, impact of flow on a surface, tonal noise due to small gaps and excitation of a cavity mode, e.g. resonance. In particular, noise due to separated flow may be reduced due to the gradual deflection of the air flow on the curved vanes 18.

The assembly 12 maintains a consistent gap between each flexible vane 18 and between the vanes 18 and the wall of the duct 10, i.e. all gaps could be equal, if required, and would remain equal along the whole longitudinal length of the vanes 18. There is no expansion or contraction of the effective internal lumen 22 and no gaps would vary in width based on desired air deflection angle. Flow separation is minimized by a reduction of pressure gradients. Accordingly, a pressure drop along the assembly 12 and in particular the vanes 18 is small, increasing overall ventilation efficiency. This may allow using a smaller blower or operating the blower with less power, thus reducing air flow generation noise. Alternatively, a greater air flow may be provided to the passengers with a given power of the ventilation system. Further, the assembly 12 allows better distribution of air across a passenger cabin, meaning less power is required, resulting in a secondary reduction in blower noise.

In the shown example, the flexible vanes 18 are described as vertical vanes that may be flexed in the left or right direction. However, the spatial orientation of the vanes 18 may be freely chosen. For example, the vanes 18 could instead be aligned horizontally and flex in an upward and downward direction. Furthermore, in the example, only one set of vanes are described but the invention could extend to 2 or more sets of vanes, for example both a 'left/right' and an 'up/down' set of vanes could be present in the same duct and with similar mechanisms albeit some limitations may be imposed on one of the vane sets.

The vanes 18 may be made from a thin rubber-like material or a material suitable to elastically bend and return to its original shape. In particular, the vanes 18 are configured to withstand multiple cycles of flexing. In a side view the vanes 18 are rectangular in shape, as is the section of the duct 10 in which they are arranged. In the vertical direction, the vanes 18 extend from the upper wall section of the duct 10 to the lower wall section of the duct 10 while being as flush as possible with these wall sections without having an undue friction between the wall and the vanes 18. Alternatively or additionally, some sort of seal, such as a brush, could be arranged at the upper and lower ends of the walls to reduce gaps with the respective adjacent wall of the duct 10.

The guiding elements 20 are as flush as possible with the vanes 18 to prevent any movement of the leading edges except in a streamwise direction in the shroud of the guiding elements 20. The vanes 18 may be tightly fitted within the guiding elements 20. In this case, lubricant, such as oil, may be added to prevent excessive friction and wear. At the trailing ends 28 of the vanes 18 a ladder-like structure of the actuation element 26 is connected to the vanes 18. The actuation element 26 may be moved by hand or with a motor. Holes in the left and right side to the actuation element 26 allow movement beyond the internal lumen 22. The grooves 32 in the upper and lower surface of the duct 10 guide and constrain the movement of the actuation element 26 while also maintaining a flush inner surface for the internal lumen 22. As the ladder-like actuation element 26 moves left or right, it drags the trailing ends 28 of the flexible vanes 18 with it, which, given the way the leading ends 24 are constrained in the guiding elements 20, cause the vanes 18 to bend. The streamwise movement of the vanes 18 in the guiding elements 20 will prevent excessive stretching of the vane material as the vanes 18 are flexed, prolonging the life of the vanes 18.

The duct 10 is flared in the region of the outlet 16 of the ventilation register in order to prevent wedge cavities to form. The flexible vanes 18 at the end of the air duct conform to the flared section 48 as they are moved with the actuation element 26 in their leftmost or rightmost position, e.g. their most-flexed position, while maintaining a constant gap along the streamwise direction of and between the vanes 18. The multiple gaps between each adjacent vane 18 and/or the vanes 18 and the duct 10 and/or the outlet 16 may be identical for every vane 18 or may be different. However, the chosen gap width will remain constant along the longitudinal length of the vanes 18 regardless of their position.

The distance between the two outermost vanes 18 determines the effective width of the internal lumen 22 and thus of the outlet 16. This effective width will remain the same regardless of desired air flow deflection since the flexible vanes 18 always move in unison with each other, as do their trailing ends 28 with the actuation element 28.

In addition to the flared section 48, the small, streamwise and backward facing step 46 prior to the flared section in the air flow direction is provided to incorporate the flexible vanes 18 closest to the walls of the duct 10 in the flexing direction while maintaining a flush surface between outermost vanes 18 and upstream duct surface. In the case of the outermost vanes 18 the guiding element 20 may be formed by an aperture in the step 46 to allow the small movement of the respective vanes 18 in the streamwise direction. This aperture may act as the guiding element 20 for the respective outermost vanes 18. A shroud-like structure similar to other guiding elements 20 may be arranged at the hole to provide further guidance.

The connection between the trailing end 28 of the vanes 18 and the actuation element 26 is such that the trailing ends 28 may each rotate relative to the actuation element 26 but essentially may not move relative thereto. The movement of the actuation element 26 therefore forces movement of the trailing ends 28 of the vanes 18. Lubrication, such as oil, may be provided to the rotation joint connecting the vanes 18 to the actuation element 26 to reduce friction and therefore wear.

All parts of the assembly 12 may be manufactured using a two component (2K) molding technique. Using 2K molding may facilitate manufacturing connections and in providing multi-material parts.

Fig. 1 sketches in a top view sketch the concept of the air duct assembly 12. The movement of the vanes 18 is shown by dotted lines and their neutral position is shown in solid lines. Arrow 42 shows the streamwise movement allowed within the shrouds of the guiding elements 20 as the trailing edge of the vanes 18 are pulled left to right. The step 46 and flare 48 of the duct 10 are illustrated and so is the way in which the flexible vanes 18 at the edges of the duct 10 conform to the shape of the flare 48 in certain positions. The step 46 allows flushness between the inboard face of the vanes 18 and the duct 10 surface upstream of the step 46.

Fig. 2 shows a partial isometric view with a top cross section through the middle of a 3D CAD model of the vanes 18, this highlights the shroud-like guiding elements 20 and ladder-like structure of the actuation element 26. It can be seen how the leading ends 24 of the vanes 18 slides in and out of the shroud in the streamwise direction due to the movement of the trailing end 28 transversal to the streamwise direction, in particular perpendicular to the air flow direction. Due to the tight fit inside the shroud, movement of the vanes 18 with their leading ends 24 in the left/right dimension and up/down dimension is restricted. Said leading ends 24 are also 'deep' enough inside the guiding elements 20, even when the vanes 18 are fully flexed, to avoid a potential failure by the vanes being completely removed from the shroud. In other words, when the trailing edge of the vanes 18 are at their most downstream position, they still remain sufficiently far away from the most downstream point (the 'entrance') of the guiding element 20 such that separation is prevented. The movement of the trailing end 28 is in unison with the ladder structure of the actuation element 26 and restricted to one dimension (left/right in the shown embodiment). However, the connection between the actuation element 26 and the vanes 18 allows a rotation of the trailing edge of each vane 18 in order to allow flexing in the desired shape without undue stress on the vanes 18. This is indicated clearly in Fig. 2, which depicts a pin, e.g. bar 36, through the trailing end 28 of the vane 18. For example, the vanes 18 may sit loosely over the respective pin. Any other method of connection that allows this rotation but restricts two dimensions of translational movement is also feasible.

Fig. 3 shows a partial front/side view with a side cross section of the ladder structure of the actuation element 26 and highlights the groove 32 or slot in the duct 10 that restricts the actuation element's movement to one dimension. This also allows the surfaces of said parts that are exposed to the airflow to be flush.

Fig. 4 shows a partial top view with top cross section of the step 46 and flare 48 of the end of the duct 10, which may also be referred to as the register. The outline of an edge of a vane 18 and a shroud of the guiding element 20 is also depicted. A hole in the stepped surface of the duct 10 will allow the streamwise movement of this particular vane 18 into the shroud of the guiding element 20 which is at least partially arranged outside of the airflow. The flushness that the step 46 allows is clearly indicated. Again, the flexible vane 18 can be seen conforming to the surface of the duct 10 in the flared section 48 in the shown position of the vane 19.

Fig. 5 shows the ladder structure of the actuation element 26 in its entirety, although some part could be hidden behind the cover element 50. Arrow 30 marks the effective width of the register outlet 16 where air may exit. This width will remain constant due to the unilateral movement of the actuation element 26 and the vanes 18. Apertures in either side of the duct 10, for example formed by the duct 10 and the cover element 50, allow the actuation element 26 and the trailing ends 28 of the vanes 18 to move in unison from left to right. These apertures will not influence the airflow since the flexible vanes 18 define the effective width of the outlet 16 and its internal lumen 22 in axial location of the vanes 18. Therefore, these apertures will not result in generation of additional unwanted noise.

### REFERENCE SIGNS LIST

- 10: air duct
- 12: air duct assembly
- 14: arrow
- 16: outlet
- 18: vanes
- 20: guiding element
- 22: internal lumen
- 24: leading end
- 26: actuation element
- 28: trailing end
- 30: arrow
- 32: guiding groove
- 34: transversal bars
- 36: vertical bars
- 38: arrow
- 40: arrow
- 42: arrow
- 44: vertical bars
- 46: step
- 48: flared section
- 50: cover element

## Claims

1. Air duct assembly (12), in particular for a motor vehicle, comprising:
- an air duct (10) with an internal lumen (22) for conducting an air flow,
- at least one flexible vane (18) at least partially arranged in the internal lumen (22) of the duct (10),
- an actuation element (26) attached to a trailing end (28) of the at least one vane (18) configured to flex the at least one vane (18) essentially transversal to the air flow at least between a first position and a second position, causing the vane (18) to guide the air flow differently in the first position than in the second position.

2. Air duct assembly (12) according to claim 1, wherein
the air duct assembly (12) comprises a guiding element (20)attached to, in particular housing a leading end (24) of the at least one vane (18) and configured to allow movement of the leading end (24) of the at least one vane (18) essentially parallel to the air flow while essentially preventing movement of the leading end (24) of the at least one vane (18) transversal to the air flow.

3. Air duct assembly (12) according to claim 1 or 2, wherein
the air duct assembly (12) comprises a plurality of flexible vanes (18) arranged spaced apart from each other and each at least partially arranged in the internal lumen (22) of the duct (10), preferably wherein the vanes (18) are arranged parallel to each other and/or maintain their relative distances in the first position and the second position.

4. Air duct assembly (12) according to claim 3 when referring back to claim 2, wherein
each of the plurality of vanes (18) is attached with its respective leading end (24) to a respective guiding element (20).

5. Air duct assembly (12) according to claims 3 or 4, wherein
each of the plurality of vanes (18) is attached with its respective trailing end (28) to the actuation element (26).

6. Air duct assembly (12) according to any of the preceding claims, wherein
the actuation element (26) is configured to allow movement of the trailing end (28) of each vane (18) essentially transversal to the air flow while essentially preventing movement of the trailing end (28) of each vane (18) parallel to the air flow, thus flexing the vane (18).

7. Air duct assembly (12) according to any of the preceding claims, wherein
a wall of the air duct (10) comprises at least one aperture or recess into which the actuation element (26) may at least partially move for flexing the vanes (18) between the first and second position.

8. Air duct assembly (12) according to any of the preceding claims, wherein
the air duct (10) is a rectangular air duct, in particular the internal lumen (22) of the air duct (10) being rectangular, and/or the air outlet (16) is a rectangular air outlet (16).

9. Air duct assembly (12) according to any of the preceding claims 3 to 8, wherein
the flexing between the first and second position defines a flexing direction and the respective vane (18) located closest to a wall of the air duct (10) on each side along the flexing direction contacts with at least its trailing end (28) the wall of the air duct (10) in one of the first and second positions.

10. Air duct assembly (12) according to claim 9, wherein
at least one of the vanes (18) closest to the wall of the air duct (10) is flush with an adjacent upstream portion of the wall in the position where the trailing end contacts the wall.

11. Air duct assembly (12) according to any of the preceding claims 2 to 9, wherein
the flexing between the first and second position defines a flexing direction and at least one vane (18) located closest to the wall of the air duct (18) in the flexing direction forms a boundary of the internal lumen of the air duct (10).

12. Air duct assembly (12) according to any of the preceding claims, wherein
the air duct (10) flares (48) outwardly in a direction essentially perpendicular to the axial region of the trailing end (28) downstream of the vanes (18).

13. Air duct assembly (12) according to any of the preceding claims, wherein
the actuation element (26) and each respective vane (18) are hingedly connected at the trailing end (28) of each respective vane (18) such that the respective trailing end (28) of each respective vane (18) may pivot relative to the actuation element (26).

14. Ventilation system for a motor vehicle comprising an air duct assembly (12) according to the preceding claims, in particular a climate control system for a motor vehicle, comprising an air duct assembly (12) according to the preceding claims.

15. Motor vehicle, in particular a car, comprising the air duct assembly (12) according to any one of claims 1 to 13 and/or the ventilation system according to claim 14.
